# EUROPÄISCHE PATENTSCHRIFT

(11) **EP 1 556 185 B1**
(45) Veröffentlichungstag und Bekanntmachung des Hinweises auf die Patenterteilung: **29.11.2006**
(21) Anmeldenummer: 03775077.5
(22) Anmeldetag: 23.10.2003
(51) Int. Cl.: B23K 11/00, B23K 9/04, B62D 7/20, B23K 11/06

(54) **VERFAHREN ZUR HERSTELLUNG EINES SPURSTANGENGEHÄUSES**
METHOD FOR PRODUCING A STEERING TIE-ROD HOUSING
PROCEDE POUR PRODUIRE UN BOITIER DE BARRE D'ACCOUPLEMENT

(30) Priorität: 24.10.2002 DE 10249768
(43) Veröffentlichungstag der Anmeldung: 27.07.2005
(73) Patentinhaber: ZF Lemförder Metallwaren AG, 49441 Lemförde (DE)
(72) Erfinder: RAKERS, Helge, 49152 Bad Essen (DE); MÖLL, Achim, 32369 Rahden (DE); WELLERDING, Martin, 49461 Damme (DE)
(86) Internationale Anmeldenummer: PCT/DE2003/003535
(87) Internationale Veröffentlichungsnummer: WO 2004/039529

(56) Entgegenhaltungen:
- EP-A- 0 015 693
- EP-A- 0 916 858
- US-A- 5 794 965

## Beschreibung

Die Erfmdung betrifft ein Verfahren zur Herstellung eines Spurstangengehäuses bestehend aus einem Spurstangenkopf und einem daran festgelegten Schaftelement, bei dem der Spurstangenkopf nach Herstellung des aus Schaftelement und Spurstangenkopf bestehenden Spurstangengehäuserohteiles durch einen mechanischen Zerspanungsprozess seine Endform erhält.

Spurstangengehäuse der eingangs geschilderten Art werden als Bauelemente von Kraftfahrzeuglenkungen eingesetzt und unterliegen auf Grund ihres besonderen Einsatzzweckes höchsten sicherheitsrelevanten Rahmenbedingungen. Diese Rahmenbedingungen werden von den Kraftfahrzeugherstellern festgelegt und sind im Stand der Technik beispielsweise in die Sicherheitsklassen A, B, C und D unterteilt, wobei die eingangs geschilderten Spurstangengehäuse der höchsten Sicherheitsstufe D unterliegen.

Um im Rahmen vorgegebener Lasten die geforderte Prozesssicherheit der Sicherheitsstufe D zu gewährleisten, ist die Übertragungsmöglichkeit vorgegebener statischer und dynamischer Kräfte sowie von Schlagbeanspruchungen notwendig.

Zur Erfüllung der genannten Kriterien werden Spurstangengehäuserohteile aus Spurstangenkopf und Schaftelement im Rahmen eines Schmiedeprozesses vorgeformt und durch eine nachgeschaltete mechanische Zerspanung in ihre endgültige durch den Fahrzeughersteller vorgegebene Form gebracht, so dass ergänzende Bauteile wie Dichtungen und Lagerbauteile im Spurstangenkopf montiert werden können. Die gesamte Herstellung aus Schmiedeprozess und nachgeschaltetem Zerspanungsprozess ist äußerst kostenintensiv, wobei in neuerer Zeit versucht worden ist, mittels Kaltschmiedevorgängen die Bearbeitungszeit für die nachgeschalteten Zerspanvorgänge herabzusetzen. Das Kaltschmieden als Herstellprozess ist andererseits wiederum relativ aufwendig und kostenintensiv, so dass die insgesamt zu erzielenden Herstellungspreisvorteile der alternativen Herstellweise nicht unbedingt als hoch anzusehen sind.

Aufgabe der vorliegenden Erfindung ist es daher, ein Verfahren zur Herstellung eines Spurstangengehäuses bereitzustellen, welches gegenüber den aus dem Stand der Technik bekannten Verfahren im Hinblick auf die Herstellkosten bedeutend günstiger realisiert werden kann.

Diese Aufgabe wird erfindungsgemäß dadurch gelöst, dass im Rahmen des erfindungsgemäßen Verfahrens das Schaftelement mit dem Spurstangenkopf mittels eines Widerstandspressschweißvorganges verbunden wird und dass anschließend zwischen der äußeren Umfangsfläche des Spurstangenkopfes und des Schaftelementes mindestens zwei beide Bauteile verbindende durch einen Schweißvorgang bewirkte Materialanhäufungen geschaffen werden.

Die spezielle Kombination der genannten Schweißverfahren führt zu einer Gesamtschweißverbindung zwischen Schaftelement und Spurstangenkopf, die in Analogie zu der bislang üblichen Schmiedeverbindung alle erforderlichen Kriterien hinsichtlich der Übertragbarkeit von statischen und dynamischen Kräften bzw. im Hinblick auf Widerstand gegen Schlagkräfte erfüllt. Dabei können die beteiligten Bauelemente Schaftelement und Spurstangenkopf im Rahmen vorgeschalteter Zerspanungsprozesse aus geeignetem, preiswert zur Verfügung stehendem Stangenmaterial hergestellt werden. Darüber hinaus lassen sich mittels des neuartigen Herstellverfahrens Baukastenversionen von Spurstangengehäusen verwirklichen, bei denen beispielsweise bestimmte Gehäuseköpfe mit unterschiedlich langen Schaftelementen kombiniert werden können.

Spezielle Ausgestaltungen der im Anspruch 1 geschilderten technischen Lehre ergeben sich darüber hinaus aus den Merkmalen der Unteransprüche.

Es hat sich insbesondere als vorteilhaft erwiesen, die Materialanhäufungen an sich diametral gegenüberliegenden Seiten des Spurstangenkopfes bzw. des Schaftelementes anzuordnen. Die gegenüberliegende Anordnung der Materialanhäufungen wirkt sich dabei vorteilhaft auf die Bauabmaße des Spurstangengehäuses aus, die insofern von großer Bedeutung sind, da der generell im Lenkungsbereich von Kraftfahrzeugen zur Verfügung stehende Bauraum nur gering bemessen ist.

Zur Herstellung der Materialanhäufung hat sich dabei das MAG-Schweißverfahren besonders bewährt, welches aus anderen Einsatzbereichen bekannt ist und kostengünstig durchgeführt werden kann.

Darüber hinaus haben Versuche ergeben, dass die Übertragung der erforderlichen Kräfte zwischen Spurstangenkopf und Schaftelement durch die Querschnittsgestaltung der Materialanhäufung als dreieckförmige Ausformung unterstützt wird, wobei die Begrenzungsflächen, die über die den zu verbindenden Bauteilen zugewandte Grundseite des Dreiecks vorstehen, im Winkel von ca. 45° zur Grundseite geneigt sind.

Um im Rahmen der Baumaßbeschränkung angrenzende Bauteile wie beispielsweise Dichtungselemente am Spurstangenkopf montieren zu können, hat es sich darüber hinaus als vorteilhaft erwiesen, dass die durch den Widerstandspressschweißvorgang hergestellte umlaufende Schweißnaht in Teilbereichen, die zu den Materialanhäufungen um ca. 90° versetzt angeordnet sind, mittels einer spanenden Bearbeitung und hier vorteilhafterweise durch einen Räumprozess zu entfernen.

Die eingangs geschilderten erfindungswesentlichen Merkmale der Verbindung zwischen Spurstangenkopf und Schaftelement erlauben es darüber hinaus zweckmäßigerweise, dass das Schaftelement nach Herstellung des Spurstangengehäuses durch einen Biegevorgang verformt werden kann.

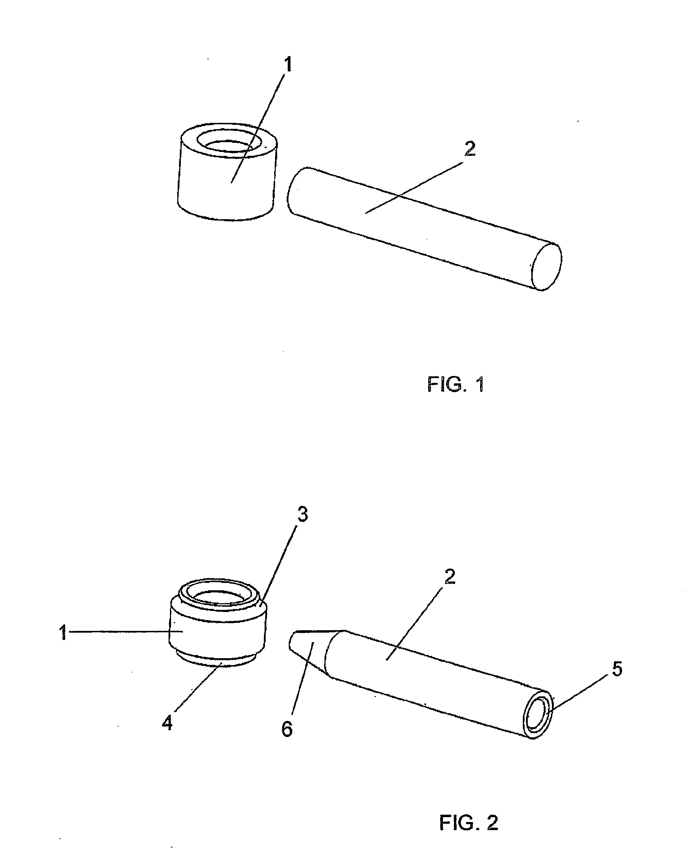

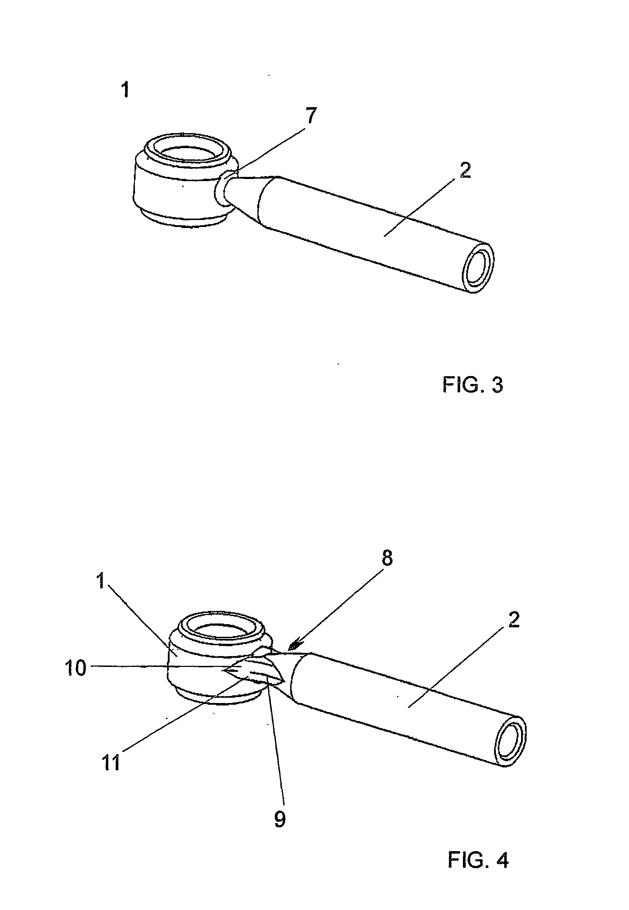

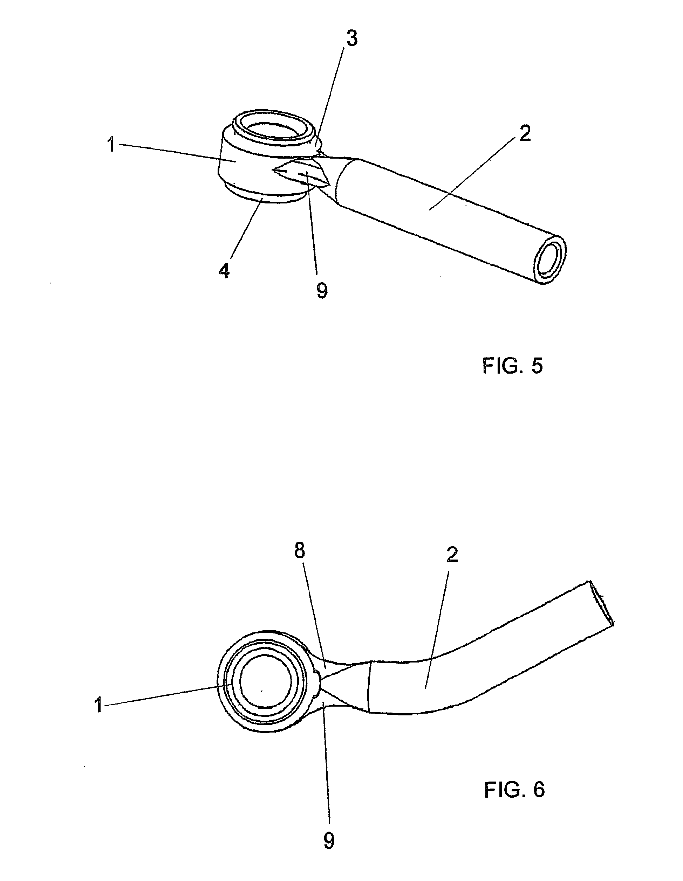

Im Folgenden wird anhand der beigefügten Figuren der Verfahrensablauf zur Herstellung eines Spurstangengehäuses im Einzelnen dargestellt. Die Figuren 1 bis 6 zeigen hierbei in perspektivischer Darstellung die einzelnen Verfahrensschritte ausgehend von den verwendeten Rohteilen für Spurstangenkopf und Schaftelement in Figur 1 bis zum fertigen Spurstangengehäuse in Figur 6.

Das Spurstangengehäuse, welches mit dem erfindungsgemäßen Verfahren hergestellt werden soll, besteht als Rohteil prinzipiell aus einem Spurstangenkopf 1 und einem Schaftelement 2, die perspektivisch in der Figur 1 dargestellt sind. Dabei handelt es sich bei dem Schaftelement 2 um ein stabförmiges zylindrisches Vollmaterial und beim Spurstangengehäuse um ein rohrzylinderförmiges Element.

Wie aus der Darstellung der Figur 2 deutlich wird, werden der Spurstangenkopf 1 sowie das Schaftelement 2 in einem ersten Produktionsschritt mit Anfasungen 3, 4 sowie 5 versehen, deren spezielle Ausführungen den späteren Ein- und Anbaugegebenheiten des Spurstangengehäuses angepasst sind. Das Schaftelement 2 besitzt an seinem zweiten freien Ende, welches nicht mit der Anfasung 5 versehen ist, zum Schluss der vorbereitenden Maßnahmen ein Kegelstumpfende 6. Mit dem im Querschnitt dünneren äußeren Ende des Kegelstumpfendes 6 wird das Schaftelement 2 gegen die zylinderförmige Außenfläche des Spurstangenkopfes 1 gepresst und mit Hilfe des Widerstandspressschweißverfahrens unter Anlegung entsprechender Spannung an den Bauteilen 1 und 2 sowie unter Aufbringung entsprechender Anpresskräfte mit dem Spurstangenkopf 1 verbunden. Durch diesen Widerstandspressschweißvorgang entsteht eine umlaufende Schweißnaht 7.

Im nachfolgenden Verfahrensschritt zur Herstellung des Spurstangengehäuses wird im Bereich des Kegelstumpfendes 6 des Schaftelementes 2 und im Bereich der angrenzenden zylindrischen Außenfläche des Spurstangenkopfes 1 an diametral gegenüberliegenden Seiten jeweils eine Materialanhäufung 8 und 9 aufgebracht. Diese Materialanhäufungen 8 und 9 bilden jeweils einen Versteifungssteg und werden an den genannten Stellen aufgeschweißt, wobei sich entsprechend einer vorteilhaften Ausgestaltung das MAG-Schweißverfahren bewährt hat. Die Materialanhäufungen 8 und 9 besitzen im Querschnitt gesehen im Wesentlichen eine dreieckförmige Gestalt, wobei die schräg zueinander verlaufenden, nach außen vorstehenden Begrenzungsflächen 10 und 11 gegenüber der Grundfläche der Materialanhäufungen im Winkel von 45° zueinander geneigt sind.

Nach Fertigstellung der zur Versteifung dienenden Materialanhäufungen 8 und 9 wird in einem weiteren Arbeitsgang vorzugsweise durch ein Räumwerkzeug im Bereich der Anfasung 3 bzw. 4 die im Rahmen des Widerstandspressschweißverfahrens entstandene Schweißnaht 7 entfernt.

Die Figur 6 zeigt schließlich, wie in einem weiteren abschließenden Fertigungsschritt nach Beendigung des Verbindungsprozesses zwischen dem Spurstangenkopf 1 und dem Schaftelement 2 dieses Schaftelement abgebogen wird, um bei der Montage speziellen Einbaugegebenheiten angepasst zu sein.

### Bezugszeichenliste

1. Spurstangenkopf
2. Schaftelement
3. Anfasung
4. Anfasung
5. Anfasung
6. Kegelstumpfende
7. Schweißnaht
8. Materialanhäufung
9. Materialanhäufung
10. Begrenzungsfläche
11. Begrenzungsfläche

## Patentansprüche

1. Verfahren zur Herstellung eines Spurstangengehäuses, bestehend aus einem Spurstangenkopf (1) und einem daran festgelegten Schaftelement (2), bei dem der Spurstangenkopf (1) nach Herstellung des aus Schaftelement (2) und Spurstangenkopf (1) bestehenden Spurstangengehäuserohteiles durch einen mechanischen Zerspanungsprozess seine Bauendform erhält,
**dadurch gekennzeichnet, dass**
das Schaftelement (2) mit dem Spurstangenkopf (1) mittels eines Widerstandspressschweißvorganges verbunden wird und anschließend zwischen der äußeren Umfangsfläche des Spurstangenkopfes (1) und des Schaftelementes (2) mindestes zwei beide Bauteile verbindende durch einen Schweißvorgang bewirkte Materialanhäufungen (8, 9) geschaffen werden.

2. Verfahren nach Anspruch 1,
**dadurch gekennzeichnet, dass**
die Materialanhäufungen (8, 9) an sich diametral gegenüberliegenden Seiten des Spurstangenkopfes (1) bzw. des Schaftelementes (2) angeordnet sind.

3. Verfahren nach einem der Ansprüche 1 oder 2,
**dadurch gekennzeichnet, dass**
die Materialanhäufungen (8, 9) mittels des MAG-Schweißverfahrens aufgetragen werden.

4. Verfahren nach einem der Ansprüche 1 bis 3,
**dadurch gekennzeichnet, dass**
die Materialanhäufungen (8, 9) im Wesentlichen einen Dreieckquerschnitt aufweisen, wobei die über die den zu verbindenden Bauteilen zugewandte Grundseite des Dreiecks vorstehenden Begrenzungsflächen (10, 11) im Winkel von ca. 45° zur Grundseite geneigt sind.

5. Verfahren nach einem der Ansprüche 1-4,
**dadurch gekennzeichnet, dass**
die durch den Widerstandspressschweißvorgang hergestellte umlaufende Schweißnaht (7) in Teilbereichen, die zu den Materialanhäufungen (8, 9) um ca. 90° versetzt am Umfang des Schaftteiles (2) angeordnet sind, mittels einer spanenden Bearbeitung entfernt wird.

6. Verfahren nach Anspruch 5,
**dadurch gekennzeichnet, dass**
die spanende Bearbeitung ein Räumvorgang ist.

7. Verfahren nach einem der Ansprüche 1 bis 6,
**dadurch gekennzeichnet, dass**
das Schaftelement (2) des Spurstangengehäuses (1) nach dessen Fertigstellung durch einen Biegevorgang verformt wird.

## Claims

1. Method for producing a track rod housing consisting of a track rod end (1) and a shaft element (2) fixed to the latter, in which the track rod end (1) is given its final structural form through a mechanical metal removing process following the production of the track rod housing blank consisting of the shaft element (2) and the track rod end (1),
**characterised in that**
the shaft element (2) is joined to the track rod end (1) by means of a pressure resistance welding process, and at least two material accumulations (8, 9), which join the two components and are effected by a welding process, are subsequently created between the outer circumferential surface of the track rod end (1) and of the shank element (2).

2. Method according to Claim 1,
**characterised in that**
the material accumulations (8, 9) are arranged at sides of the track rod end (1) or the shaft element (2) which lie diametrically opposite one another.

3. Method according to either of Claims 1 and 2,
**characterised in that**
the material accumulations (8, 9) are applied by means of the MAG welding method.

4. Method according to any one of Claims 1 to 3,
**characterised in that**
the material accumulations (8, 9) essentially have a triangular cross section, wherein the boundary faces (10, 11), which project beyond the base side, facing the components to be joined, of the triangle are inclined at an angle of approximately 45° relative to the base side.

5. Method according to any one of Claims 1 - 4,
**characterised in that**
the all-round weld seam (7), produced by the pressure resistance welding process, is removed in sub-regions which are staggered by approximately 90° at the circumference of the shaft part (2) relative to the material accumulations (8, 9) by means of machining.

6. Method according to Claim 5,
**characterised in that**
the machining process is a broaching process.

7. Method according to Claim 5,
**characterised in that**
the shaft element (2) of the track rod housing (1) is shaped by a bending process after it has been finished.

## Revendications

1. Procédé de fabrication d'un boîtier de barre d'accouplement, constitué d'une tête de barre d'accouplement (1) et d'un élément de tige (2) fixé sur celle-ci, dans lequel après fabrication de l'ébauche du boîtier de barre d'accouplement, constitué de l'élément de tige (2) et de la tête de barre d'accouplement (1), la tête de barre d'accouplement (1) prend sa forme définitive de construction par un processus mécanique d'enlèvement de copeaux,
**caractérisé en ce que**
l'élément de tige (2) est relié à la tête de barre d'accouplement (1) par un processus de soudage par pression et résistance, puis, entre la surface périphérique extérieure de la tête de barre d'accouplement (1) et de l'élément de tige (2), sont réalisées au moins deux accumulations de matière (8, 9) reliant les deux composants et provoquées par une opération de soudage.

2. Procédé selon la revendication 1,
**caractérisé en ce que**
les accumulations de matière (8, 9) sont disposées sur des côtés diamétralement opposés de la tête de barre d'accouplement (1) ou de l'élément de tige (2).

3. Procédé selon l'une des revendications 1 ou 2,
**caractérisé en ce que**
les accumulations de matière (8, 9) sont appliquées par le procédé de soudage MAG.

4. Procédé selon l'une des revendications 1 à 3,
**caractérisé en ce que**
les accumulations de matière (8, 9) présentent sensiblement une section transversale triangulaire, les surfaces de délimitation (10, 11), dépassant de la base du triangle, tournée vers les composants à relier, étant inclinées d'un angle d'environ 45° par rapport à la base.

5. Procédé selon l'une des revendications 1 à 4,
**caractérisé en ce que**
le cordon de soudure (7) périphérique, réalisé par le processus de soudage à pression et résistance, est éliminé par un usinage à enlèvement de copeaux, dans des zones partielles qui sont disposées décalées d'environ 90° par rapport aux accumulations de matière (8, 9), sur le pourtour de l'élément de tige (2).

6. Procédé selon la revendication 5,
**caractérisé en ce que**
l'usinage par enlèvement de copeaux est un processus d'enlèvement.

7. Procédé selon l'une des revendications 1 à 6,
**caractérisé en ce que**
l'élément de tige (2) du boîtier de barre d'accouplement (1) est déformé par un cintrage, après sa fabrication.
